# EUROPEAN PATENT APPLICATION

(11) **EP 4 722 055 A1**
(43) Date of publication of application: **08.04.2026**
(21) Application number: 24383051.0
(22) Date of filing: 01.10.2024
(51) Int. Cl.: B60T 7/04, B60T 7/06, B60T 8/32, F16D 66/02, G05G 1/38, G05G 1/42

(54) **PEDAL PAD DEVICE FOR A MOTOR VEHICLE AND MOTOR VEHICLE**

(71) Applicant: Batz, S.Coop., 48140 Igorre (ES)
(72) Inventor: CORRAL RODRIGUEZ, Pedro, 48903 BARAKALDO (ES); PEREZ ZABALA, Juan Estuardo, 48340 AMOREBIETA-ETXANO (ES)
(74) Representative: Galbaian S.Coop.

(57) **Abstract**

Pedal pad device for a motor vehicle and motor vehicle, the device comprising a first housing (110) with a cavity (111), a second housing (120) movable in the cavity (111) between a rest position and an actuating position, a pedal plate (130) configured to move the second housing (120) along a longitudinal axis (Z) in response to a force (F) applied to the plate (130), an elastic element (140) generating an elastic force that causes the second housing (120) to move towards the rest position, a detection device (150) for detecting the displacement of the second housing (120), and rolling elements (160) guiding the second housing (120), wherein each rolling element (160) is housed in a cage (170) comprising an inner wall (171), an outer wall (172), an upper stop (173) and a lower stop (174), the lower stop (174) being movable between an initial position and an end position, and each rolling element (160) being pushed by its lower stop (174) towards the initial position when the elastic element (140) moves the second housing (120) towards the rest position.

## Description

### TECHNICAL FIELD

The present invention relates to a pedal pad device for a motor vehicle and to a motor vehicle comprising such pedal pad device, in particular a pedal pad device for the brake pedal of a motor vehicle.

### PRIOR ART

Pedal pad devices for motor vehicles are known, in particular foot-operated pedal pad devices such as brake, clutch or accelerator pedals.

In modern vehicle construction, electrification and the development of electric vehicles are becoming increasingly important. Brake systems also have more and more electronic components (e.g. electric servo brakes, control units, sensors, etc.) and the use of electronic brake pedals (known as "brake by wire") has now increased.

In a conventional braking system, the pedal on which the driver acts is mechanically connected to the hydraulic circuit of the braking system, with the hydraulic circuit exerting a resistance to the action of the driver on the pedal, whereas in electronic brake pedals, the driver does not act directly on the braking system, Instead, the pedals have a detection device which detects the position and/or force with which the driver is acting on the pedal at any given moment, and a control unit interprets the information sensed by the detection device to act on the braking system accordingly. Electronic brake pedals use elastic elements, usually springs, which generate an elastic force that opposes the force with which the driver acts on the pedal, and these elastic elements must be designed so that the elastic force generated simulates the resistance generated by the hydraulic circuit of a conventional braking system.

For example, DE102006030846, or US2021004040A1A1, shows a brake pedal pad device comprising a first housing with a cavity, a second housing movable in the cavity of the first housing between a rest position and an actuating position, a pedal plate attached to the second housing that is configured to move the second housing along a longitudinal axis in response to a force applied to the pedal plate, an elastic element arranged between the first housing and the second housing which generates an elastic force that causes the second housing to move towards the rest position, and a detection device for detecting the displacement of the second housing along the longitudinal axis between the rest position and the actuating position.

### DISCLOSURE OF THE INVENTION

The object of the invention is to provide a pedal pad device for a motor vehicle and a motor vehicle comprising said pedal pad device, as defined in the claims.

A first aspect of the invention relates to a pedal pad device for a motor vehicle comprising:
- a first housing with a cavity,
- a second housing movable in the cavity of the first housing between a rest position and an actuating position,
- a pedal plate attached to the second housing that is configured to move the second housing along a longitudinal axis in response to a force applied to the pedal plate,
- an elastic element arranged between the first housing and the second housing which generates an elastic force that causes the second housing to move towards the rest position, and wherein the force applied to the pedal plate must be greater than the elastic force generated by the elastic element to move the second housing from the rest position towards the actuating position, and
- a detection device for detecting the displacement of the second housing along the longitudinal axis between the rest position and the actuating position.

The pedal pad device further comprises rolling elements arranged between the first housing and the second housing for guiding the second housing between the rest position and the actuating position along the longitudinal axis, wherein each rolling element is housed in a cage formed by an inner wall of the first housing, an outer wall of the second housing, an upper stop of the first housing and a lower stop, and wherein the lower stop is movable between an initial position and an end position, each rolling element being pushed by its lower stop towards the initial position when the elastic element moves the second housing towards the rest position.

Thus, the contact between the housings is established through the rolling elements, so that the rolling elements rotate due to the contact with the housings and move in the direction of the longitudinal axis while the second housing moves with respect to the first housing. This guidance by the rolling elements avoids direct contact between the housings and thus minimises the resistance to displacement that can be generated by friction between the housings. Thus, when the driver acts on the pedal, the resistance to displacement perceived by the driver is essentially due to the elastic force generated by the elastic element, the friction between the housings and the rolling elements being negligible. This is particularly relevant when, due to continuous use of the pedal, clearances between the casings start to appear. For example, in US2021004040A1, which has casings in direct contact with each other, when clearances appear, the friction between the casings is not linear throughout the pedal stroke, which can cause the driver to feel uncomfortable when actuating the pedal.

In addition, the lower stops of the pedal pad device of the invention ensure that the rolling elements return to their initial position when the second housing returns to the rest position after the driver has ceased to apply force to the pedal, i.e. they ensure that the rolling elements do not lose travel. This is also particularly relevant in the event of clearances between the housings which, depending on the direction of the force applied to the pedal plate, cause some of the rolling elements to stop contacting the housings in certain areas and therefore to slide instead of rolling or even to fall under their weight until they hit the lower stops of the pedal pad device, losing their correct position in the device, relative to the position of the second housing. Thus, in the event of such clearances appearing, the lower stops return the rolling elements to their initial position while waiting for the pedal to be actuated again.

A second aspect of the invention relates to a vehicle comprising a pedal pad device as described above.

These and other advantages and features of the invention will become apparent in view of the figures and the detailed description of the invention.

### DESCRIPTION OF THE DRAWINGS

Figure 1 shows a perspective view of the pedal pad device according to a first example of the invention.
Figure 2 shows a sectional view of the pedal pad device of the first example in a rest position.
Figure 3 shows a perspective view of the second housing of the pedal pad device of the first example attached to the pedal plate.
Figure 4 shows an enlarged view of the pedal pad device of the first example in the actuating position.
Figure 5 shows an enlarged view of the open upper end of the first housing of the pedal pad device of the first example.
Figure 6 shows a sectional view of the pedal pad device in a rest position, according to a second example of the invention.
Figure 7 shows an enlarged view of the pedal pad device of the second example in the actuating position.
Figure 8 shows an enlarged view of the open upper end of the first housing of the pedal pad device of the second example.

### DETAILED DISCLOSURE OF THE INVENTION

The invention relates to a pedal pad device 100, such as for example a brake pedal, a clutch pedal or an accelerator pedal. The pedal pad device 100 can be used in a motor vehicle, such as a passenger car, truck or bus. The pedal pad device 100 is preferably a foot-operated pedal pad device, and is therefore located in the footwell of a motor vehicle.

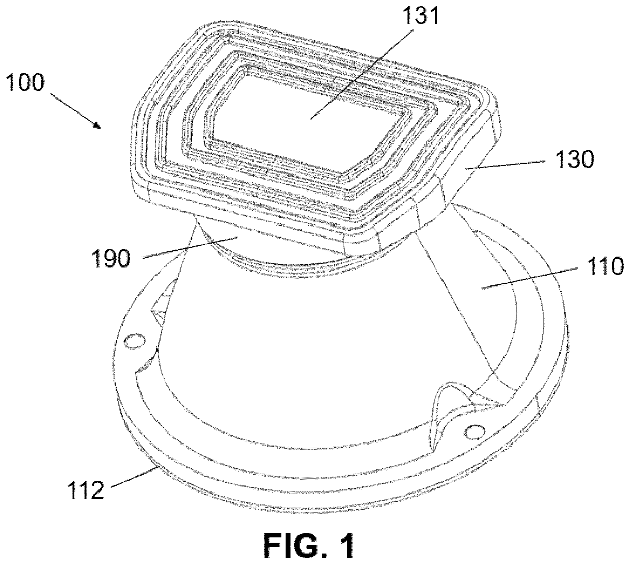

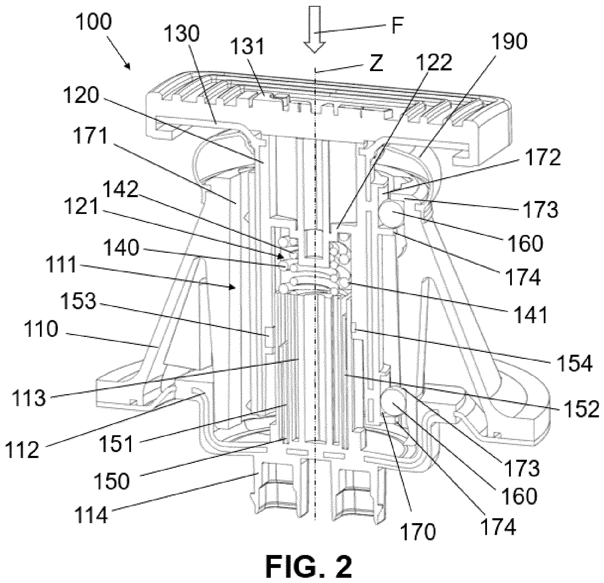

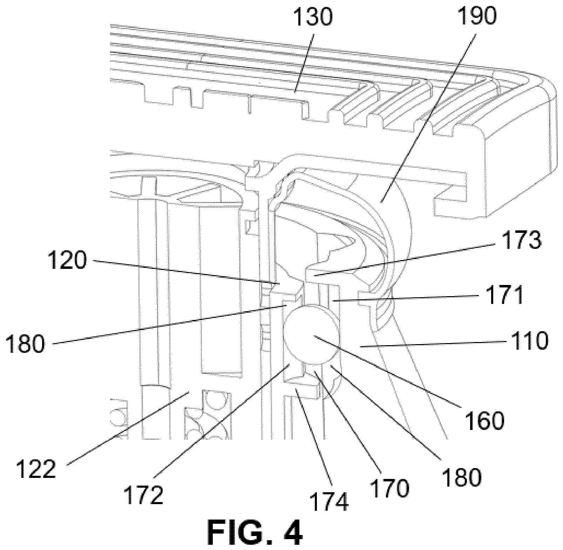

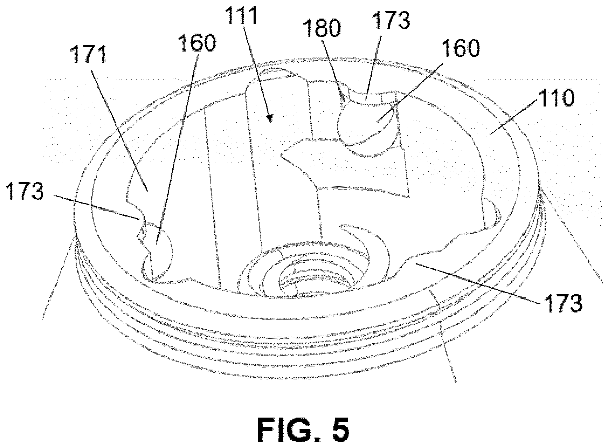

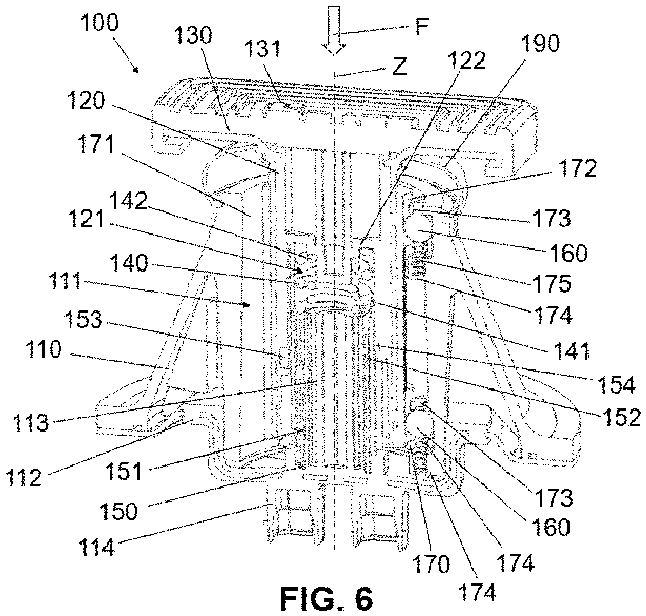

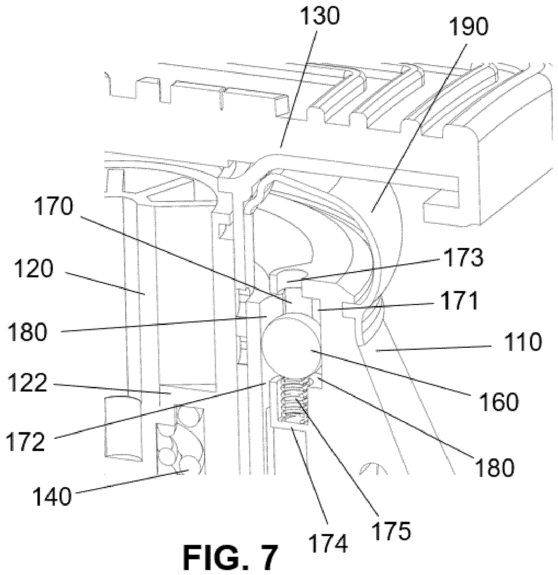

Figures 1 to 5 show a first example of the pedal pad device 100 of the invention and figures 6 to 8 show a second example of the pedal pad device 100 of the invention. Figures 2 and 6 show the pedal pad device 100 when it is in the rest position, i.e. when the driver does not act on the pedal pad device 100, while figures 4 and 7 show the pedal pad device 100 in the actuating position, i.e. when the driver acts on the pedal pad device 100 until the pedal pad device 100 is moved to the actuating position.

Examples described and pictured herein should not be construed as being limiting as to the scope, applicability or configuration of the present disclosure. Like reference numerals refer to like elements throughout.

The pedal pad device 100 is configured to attach to a fixed section of a motor vehicle, said pedal pad device 100 preferably being part of a push-button type pedal as shown in the figures. The fixed section of the vehicle may be a part of the vehicle chassis, or an additional bracket which also forms part of the pedal pad device 100 mentioned above, said additional bracket being attached to the vehicle chassis.

Preferably the pedal pad device 100 is part of an electronic brake, known as "brake by wire". In this type of electronic brake, the driver does not act directly on the braking system, but sensors estimate the force with which the driver is acting on the pedal at any given moment, and a control unit is responsible for interpreting the information from the sensors in order to act on the brakes of the vehicle. In conventional brakes, the pedal on which the driver acts is mechanically connected to the hydraulic circuit of the braking system, with the hydraulic circuit exerting a resistance to the force exerted by the driver.

The pedal pad device 100 of the invention comprises a first housing 110 with a cavity 111 and a second housing 120 movable in the cavity 111 of the first housing 110 between a rest position and an actuating position. The second housing 120 is telescopically guided in the first housing 110 along a longitudinal axis Z of the pedal pad device 100. The second housing 120 has a cylindrical tubular shape with a central longitudinal axis extending from and coinciding with the longitudinal axis Z, and the cavity 111 of the first housing 110 has a cylindrical shape substantially reciprocal to the cylindrical tubular shape of the second housing 120. The first housing 110 has a central longitudinal axis which is located in the centre of the cavity 111 and which coincides with the central longitudinal axis of the second housing 120 and with the longitudinal axis Z of the pedal pad device 100.

The second housing 120 is attached to a pedal plate 130 that is configured to move the second housing 120 along the longitudinal axis Z in response to a force F applied on the pedal plate 130. The pedal plate 130 has a top face 131 that receives a force F applied by a driver of the vehicle to move the second housing 120 in the direction of the longitudinal axis Z.

The pedal pad device 100 has an elastic element 140 that is arranged between the first housing 110 and the second housing 120, and the elastic element 140 generates an elastic force that causes the second housing 120 to move towards the rest position. The force F applied to the pedal plate 130 must be greater than the elastic force generated by the elastic element 140 to move the second housing 120 from the rest position to the actuating position. In 'brake by wire' devices, the elastic force generated by the elastic element 140 is designed so that the driver perceives a resistance when actuating the pedal pad device 100 similar to that obtained in conventional braking devices.

Preferably, the elastic element 140 is a spring 141, such that when force F is applied on the pedal plate 130 that moves the second housing 120 from the rest position towards the actuating position, the spring 141 compresses generating an elastic force that causes the second housing 120 to move towards the rest position when force F is no longer applied on the pedal plate. That is, when the force F is no longer applied, the spring 141 expands moving the second housing 120 towards the rest position.

Even more preferably, in order to increase safety and to obtain redundancy, the elastic element 140 comprises a first spring 141 and a second spring 142 which are arranged between the first housing 110 and the second housing 120 concentrically. The first spring 141 generates a first elastic force and the second spring 142 generates a second elastic force, such that the elastic force that causes the second housing 120 to move towards the rest position is the sum of the first elastic force and the second elastic force generated by both springs 141 and 142.

The pedal pad device 100 has a detection device 150 for detecting displacement of the second housing 120 along the longitudinal axis Z between the rest position and the actuating position. The detection device 150 is configured to generate an output signal that is dependent on the force F applied on the pedal plate 130 that causes the displacement of the second housing 120 along the longitudinal axis Z. For example, such an output signal can be processed by a control unit of the motor vehicle to act on the braking system of the vehicle.

According to the invention, the pedal pad device 100 comprises rolling elements 160 arranged between the first housing 110 and the second housing 120 for guiding the second housing 120 between the rest position and the actuating position along the longitudinal axis Z. Each rolling element 160 is housed in a cage 170 formed by an inner wall 171 of the first housing 110, an outer wall 172 of the second housing 120, an upper stop 173 of the first housing 110 and a lower stop 174, and the lower stop 174 is movable between an initial position and an end position, each rolling element 160 being pushed by its lower stop 174 towards the initial position when the elastic element 140 moves the second housing 120 towards the rest position.

Thus, the rolling elements 160 are retained between the inner wall 171 of the first housing 110 and the outer wall 172 of the second housing 120, so that when the second housing 120 moves relative to the first housing 110, the rolling elements 160 rotate by moving in the direction of the longitudinal axis Z without the rolling elements sliding relative to the housings. Thus, the rolling elements rotate during the displacement of the second housing 120 without any direct contact between the housings 110 and 120, so that the perception of the driver when acting on the pedal plate 130 is due solely to the elastic force generated by the elastic element 140, the friction of the rolling elements 160 against the housings being negligible. On the other hand, the lower stops 174 ensure that the rolling elements 160 return to their initial position when the second housing 120 returns to its rest position, avoiding loss of travel.

Preferably, the inner wall 171 of the first housing 110 and the outer wall 172 of the second housing 120 have channels 180 extending in a direction parallel to the longitudinal axis Z, the channels 180 having a concave shape that is reciprocal to the outer surface of the rolling elements 160, the rolling elements 160 being fitted between the channels 180 of the first housing 110 and the channels 180 of the second housing 120, such that the movement of the second housing 120 in the cavity 111 of the first housing 110 is restricted to a single translational movement along the longitudinal axis Z. In this way, rotational moments between the housings are prevented, in particular the second housing 120 cannot move in a direction transverse to the longitudinal Z axis.

The detection device 150 may comprise a single sensor for detecting the displacement of the second housing 120 along the longitudinal axis Z, such as a travel sensor, a force sensor, a distance sensor, or other analogous sensor for determining pedal travel, however, for increased safety and redundancy, the detection device 150 comprises two sensors 151 and 152 that measure pedal displacement independently and redundantly, as indicated by ASIL D (Automotive Safety Integrity Level D) as defined in ISO 26262.

Preferably, the detection device 150 comprises two sensors 151 and 152 attached to one of the housings and two targets 153 and 154 attached to the other of the housings, and wherein the two sensors 151 and 152 are the same type of sensor measuring the same physical variable. That is, each sensor 151 and 152 measures the same physical variable independently. Even more preferably, the two sensors 151 and 152 are attached to the first housing 110 and the two targets 153 and 154 are attached to the second housing 120 and are translated together with the second housing 120. Thus, one of the sensors 151 detects the displacement of one of the targets 143 and the other of the sensors 152 detects the displacement of the other of the targets 144. Alternatively, the two targets 153 and 154 may be attached to the first housing 110 and the two sensors 151 and 152 may be attached to the second housing 120, moving together with the second housing 120.

Preferably, the sensors 151 and 152 are travel sensors. For example, the two sensors 151 and 152 may be two inductive detection sensors, with transmitting and receiving coils, or two Hall effect sensors 151 and 152.

As indicated above, Figures 1 to 5 show the pedal pad device 100 according to a first example of the invention.

The pedal pad device 100 of the first example comprises a first housing 110 having a cavity 111 and a second housing 120 movable in the cavity 111 of the first housing 110 between a rest position and an actuating position, a pedal plate 130 attached to the second housing 120 that is configured to move the second housing 120 along a longitudinal axis Z in response to a force F applied on the pedal plate 130, an elastic element 140 arranged between the first housing 110 and the second housing 120 that generates an elastic force that causes the second housing 120 to move towards the rest position, and wherein the force F applied on the pedal plate 130 must be greater than the elastic force generated by the elastic element 140 to move the second housing 120 from the rest position towards the actuating position, and a detection device 150 for detecting the displacement of the second housing 120 along the longitudinal axis Z between the rest position and the actuating position.

The first housing 110 has an inner wall 171 parallel to the longitudinal axis Z and the second housing 120 has an outer wall 172 also parallel to the longitudinal axis Z and facing the inner wall 171 of the first housing 110 and between the inner wall 171 of the first housing 110 and the outer wall 172 of the second housing 120 there are rolling elements 160 which guide the second housing 120 between the rest position and the actuating position along the longitudinal axis Z. Preferably, said rolling elements 160 are balls which are in direct contact with the walls 171 and 172 of the housings 110 and 120 and roll in the direction of the longitudinal axis Z when the second housing 120 moves relative to the first housing 110.

Each rolling element 160 is housed in a cage 170 formed by an inner wall 171 of the first housing 110, an outer wall 172 of the second housing 120, an upper stop 173 of the first housing 110 and a lower stop 174, the lower stop 174 being movable between an initial position and an end position, and each rolling element 160 is pushed by its lower stop 174 towards the initial position when the elastic element 140 moves the second housing 120 towards the rest position.

The travel of the rolling elements 160 is limited between the upper and lower stops 173 and 174, and since the second housing 120 moves synchronously with the rolling elements 160, these stops also help to limit the travel of the second housing 120 when the second housing 120 moves from the actuating position to the rest position.

Preferably, the first housing 110 has a truncated cone shape and the second housing 120 has a tubular shape that fits into the cavity 111 of the first housing 110.

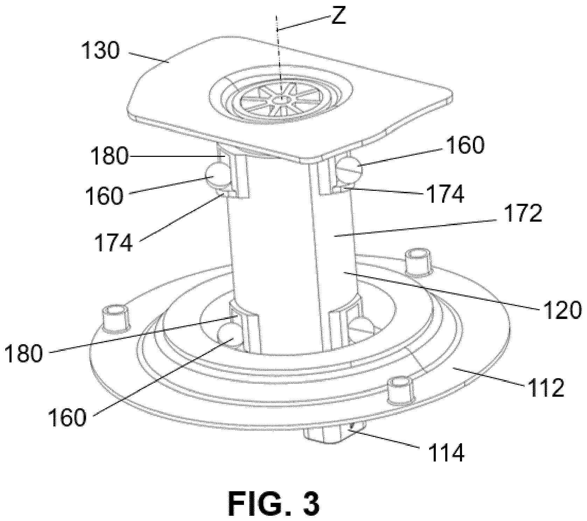

As can be seen in detail in Figures 3 and 4, the inner wall 171 of the first housing 110 and the outer wall 172 of the second housing 120 have channels 180 extending in a direction parallel to the longitudinal axis Z. The channels 180 have a concave shape that is reciprocal to the outer surface of the rolling elements 160, such that the rolling elements 160 are fitted between the channels 180 of both housings 110 and 120, such that the displacement of the second housing 120 is restricted to a single translational movement along the longitudinal axis Z.

Each lower stop 174, of the pedal pad device 100 of the first example, is attached to the second housing 120 and moves together with the second housing 120, such that when the second housing 120 moves from the actuating position towards the rest position under the action of the elastic force generated by the elastic element 140, the lower stop 174 of the second housing 120 pushes the rolling element 160 towards the initial position. This prevents the rolling elements 160 from losing travel during the displacement of the second housing 120, which can occur when clearances between the housings 110 and 120 occur due to use.

The pedal pad device 100 of the first example comprises an elastic element 140 comprising a first spring 141 and a second spring 142 which are arranged concentric with respect to the longitudinal axis Z. The first spring 141 generates a first elastic force and the second spring 142 generates a second elastic force, such that the elastic force that causes the second housing 120 to move towards the rest position is the sum of the first elastic force and the second elastic force generated by both springs 141 and 142.

The first housing 110 has an open upper end that is connected to the cavity 111 in which the second housing 120 is moved and an open lower end that is closed with a lower lid 112. Alternatively, the first housing 110 and the lower lid 112 may be one and the same piece.

The first housing 110 has a central support 113 projecting vertically from the lower lid 112 and the second housing 120 has an internal recess 121 in which the central support 113 is housed.

The springs 141 and 142 of the elastic element 140 are arranged in the internal recess 121 of the second housing 120 and each of the springs 141 and 142 have a lower end which is attached to the central support 113 of the first housing 110 and an upper end which is attached to a seat 122 of the internal recess 121 of the second housing 120.

Preferably, the pedal pad device 100 of the first example comprises three rolling elements 160 arranged in an upper part of the pedal pad device 100 and three further rolling elements 160 arranged in a lower part of the pedal pad device 100. The three rolling elements 160 of the upper part are arranged in radial positions equidistant from each other with respect to the longitudinal axis Z, i.e. the rolling elements 160 are arranged in radial positions at 120°. The three rolling elements 160 of the lower part have an identical arrangement to those of the upper part. Even more preferably, the rolling elements 160 of the upper part of the pedal pad device 100 are axially aligned with the rolling elements 160 of the lower part of the pedal pad device 100.

The detection device 150 comprises two sensors 151 and 152 attached to one of the housings 110 and two targets 153 and 154 attached to the other of the housings 120, and the two sensors 151 and 152 are the same type of sensor measuring the same physical variable. For example, the two sensors 151 and 152 may be two inductive detection sensors, or the two sensors 151 and 152 may be two Hall effect sensors.

The two sensors 151 and 152 of the detection device 150 are arranged in the central support 113 of the first housing 110, so the sensors 151 and 152 are located within the internal recess 121 of the second housing 120 and within the cavity 111 of the first housing 110. This results in a compact, space saving design in which the electronics of the sensors are protected. Preferably, the two sensors 151 and 152 are located in diametrically opposite positions with respect to the longitudinal axis Z. On the other hand, the two targets 153 and 154 are opposite the sensors 151 and 152 which are arranged in the central support 113, whereby the two targets 153 and 154 may be arranged on the inner wall of the second housing 120 or may be partially or completely embedded in the second housing 120.

The lower lid 112 has inlets 114 where connection terminals of the sensors 151 and 152 are located and through these terminals the sensors can be electrically powered and a data connection can be established with a vehicle control unit to process the output signal generated by the sensors.

The pedal pad device 100 of the first example additionally comprises a rubber 190 which is arranged between the pedal plate 130 and the open upper end of the first housing 110 which communicates with the cavity 111 in which the second housing 120 is moved. Preferably, the rubber 190 extends from the open upper end of the first housing 110 to an area where the junction between the pedal plate 130 and the second housing 120 is established.

Figures 6 to 8 show the pedal pad device 100 according to a second example of the invention.

The pedal pad device 100 of the second example differs from the pedal pad device 100 of the first example only in the lower stops 174 which are used to push the rolling elements 160 into their initial position.

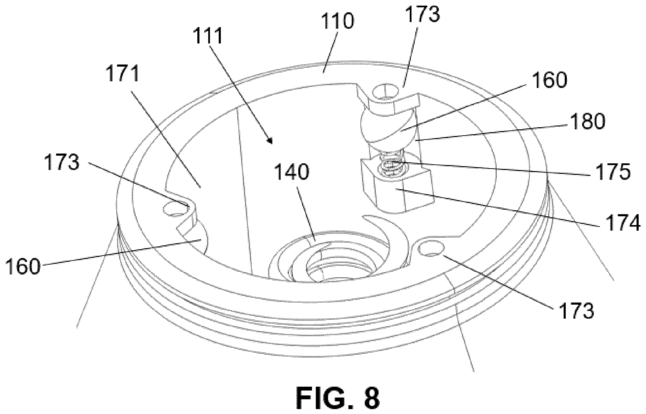

As can be seen in detail in Figures 7 and 8, in the pedal pad device 100 of the second example, each lower stop 174 has a spring 175 with a lower end attached to the first housing 110 and an upper end on which the rolling element 160 rests, such that when the second housing 120 is moved towards the actuating position by the force F applied on the pedal plate 130, the rolling element 160 compresses the spring 175 of the lower stop 174 moving it from the initial position towards the end position, and when the second housing 120 moves towards the rest position by the action of the elastic force generated by the elastic element 140, the spring 175 expands pushing the rolling element 160 towards the initial position.

The rolling elements 160 are not physically attached to the upper end of their respective spring 175, but are supported by the springs 175 with the possibility of rotating, thus, when the second housing 120 is moved from the rest position towards the actuating position by the action of the force F applied on the pedal plate 130, the rolling elements rotate by moving in the longitudinal direction Z and compressing the springs 175. Thus, in contrast to the pedal pad device 100 of the first example, the lower stops 174 are not moved together with the second housing 120, but the lower stops 174 of the second example are arranged in the first housing 110 and the springs 175 of the lower stops 174 cause the rolling elements 160 to return to their initial position when the force F is not being applied on the pedal plate 130.

The rest of the characteristics are analogous to the first example and are therefore not described again.

The invention also relates to a vehicle comprising a pedal pad device 100 as described above, wherein the pedal pad device forms part of an electronic braking device also known as a "Brake by wire" device.

## Claims

1. Pedal pad device for a motor vehicle, comprising:
a first housing (110) with a cavity (111),
a second housing (120) movable in the cavity (111) of the first housing (120) between a rest position and an actuating position,
a pedal plate (130) attached to the second housing (120) which is configured to move the second housing (120) along a longitudinal axis (Z) in response to a force (F) applied to the pedal plate (130),
an elastic element (140) arranged between the first housing (110) and the second housing (120) that generates an elastic force that causes the second housing (120) to move towards the rest position, and wherein the force (F) applied to the pedal plate (130) must be greater than the elastic force generated by the elastic element (140) to move the second housing (120) from the rest position towards the actuating position, and
a detection device (150) for detecting the displacement of the second housing (120) along the longitudinal axis (Z) between the rest position and the actuating
position,
**characterised in that** the pedal pad device (100) further comprises rolling elements (160) arranged between the first housing (110) and the second housing (120) for guiding the second housing (120) between the rest position and the actuating position along the longitudinal axis (Z), wherein each rolling element (160) is housed in a cage (170) comprising an inner wall (171) of the first housing (110), an outer wall (172) of the second housing (120), an upper stop (173) of the first housing (110) and a lower stop (174), and wherein the lower stop (174) is movable between an initial position and an end position, each rolling element (160) being pushed by its lower stop (174) towards the initial position when the elastic element (140) moves the second housing (120) towards the rest position.

2. Device according to claim 1, wherein the inner wall (171) of the first housing (110) and the outer wall (172) of the second housing (120) have channels (180) extending in a direction parallel to the longitudinal axis (Z), the channels (180) having a concave shape that is reciprocal to the outer surface of the rolling elements (160), the rolling elements (160) being fitted between the channels (180) of the first housing (110) and the channels (180) of the second housing (120), such that the movement of the second housing (120) in the cavity (111) of the first housing (110) is restricted to a single translational movement along the longitudinal axis (Z).

3. Device according to claim 1 or 2, wherein the lower stop (174) is attached to the second housing (120) and moves together with the second housing (120), such that when the second housing (120) moves from the actuating position towards the rest position by the action of the elastic force generated by the elastic element (140), the lower stop (174) of the second housing (120) pushes the rolling element (160) towards the initial position.

4. Device according to claim 1 or 2, wherein the lower stop (174) has a spring (175) with a lower end attached to the first housing (110) and an upper end on which the rolling element (160) rests, such that when the second housing (120) is moved towards the actuating position by the force (F) applied on the pedal plate (130), the rolling element (160) compresses the spring (175) of the lower stop (174) moving it from the initial position towards the end position, and when the second housing (120) moves towards the rest position by the action of the elastic force generated by the elastic element (140), the spring (175) expands pushing the rolling element (160) towards the initial position.

5. Device according to any of the preceding claims, comprising three rolling elements (160) arranged in an upper part of the pedal pad device (100) and three further rolling elements (160) arranged in a lower part of the pedal pad device (100).

6. Device according to any of the preceding claims, wherein the detection device (150) comprises two sensors (151,152) attached to one of the housings (110) and two targets (153,154) attached to the other of the housings (120), and wherein the two sensors (151,152) are the same type of sensor measuring the same physical variable.

7. Device according to the preceding claim, wherein the two sensors (151,152) are inductive detection sensors.

8. Device according to claim 6, wherein the two sensors (151, 152) are Hall effect sensors.

9. Device according to any of the preceding claims, wherein the elastic element (140) comprises a first spring (141) and a second spring (142) which are arranged between the first housing (110) and the second housing (120) concentrically, wherein the first spring (141) generates a first elastic force and the second spring (142) generates a second elastic force, such that the elastic force that causes the second housing (120) to move towards the rest position is the sum of the first elastic force and the second elastic force generated by both springs (141,142).

10. Device according to any of the preceding claims, wherein the first housing (110) has an open upper end which is connected to the cavity (111) in which the second housing (120) is moved and an open lower end which is closed with a lower lid (112).

11. Device according to the preceding claim, wherein the first housing (110) has a central support (113) projecting vertically from the lower lid (112) and the second housing (120) has an internal recess (121) in which the central support (113) is housed.

12. Device according to the preceding claim, wherein the springs (141, 142) of the elastic element (140) are arranged in the inner recess (121) of the second housing (120), and wherein each of the springs (141, 142) has a lower end which is attached to the central support (113) of the first housing (110) and an upper end which is attached to a seat (122) of the inner recess (121) of the second housing (120).

13. Device according to the preceding claim, wherein the two sensors (151,152) are arranged in the central support (113) of the first housing (110).

14. Device according to any of claims 10 to 13, additionally comprising a rubber (190) arranged between the pedal plate (130) and the open upper end of the first housing (110) communicating with the cavity (111) in which the second housing (120) is moved.

15. Vehicle comprising a pedal pad device according to any of the preceding claims.
